# EUROPÄISCHE PATENTSCHRIFT

(11) **EP 4 140 863 B1**
(45) Veröffentlichungstag und Bekanntmachung des Hinweises auf die Patenterteilung: **24.01.2024**
(21) Anmeldenummer: 22192495.4
(22) Anmeldetag: 26.08.2022
(51) Int. Cl.: B62H 1/02

(54) **NACHRÜST-FAHRRADSTÄNDER**
RETROFIT BICYCLE STAND
PORTE-VÉLO MODERNISÉ

(30) Priorität: 26.08.2021 DE 202021104592 U
(43) Veröffentlichungstag der Anmeldung: 01.03.2023
(73) Patentinhaber: Hebie GmbH & Co. KG, 33617 Bielefeld (DE)
(72) Erfinder: Schreiber, Bodo, 34513 Waldeck (DE)
(74) Vertreter: Patentanwälte Olbricht Buchhold Keulertz

(56) Entgegenhaltungen:
- DE-U1- 9 419 135
- DE-U1-202017 104 250

## Beschreibung

Die Erfindung betrifft einen Fahrradständer nach dem Oberbegriff des Anspruchs 1.

Gattungsgemäße Fahrradständer sind aus der Praxis bekannt, sie werden beispielsweise von der Firma Hebie GmbH & Co. KG unter der Modellbezeichnung "Fox" in mehreren Varianten angeboten. Das Dokument DE202017104250U zeigt einen gattungsgemäßen Fahrradständer.

Im Rahmen des vorliegenden Vorschlags werden derartige Fahrradständer auch als "Nachrüst-Fahrradständer" bezeichnet. Es ist bekannt, werkseitig bei der Herstellung eines Fahrrads Befestigungspunkte am Fahrradrahmen vorzusehen, die zur Montage eines Fahrradständers dienen und als Ständeraufnahme bezeichnet werden. Eine Ständeraufnahme kann beispielsweise als Sockel ausgestaltet sein, der mit einer oder mehreren Gewindebohrungen versehen ist. Im Unterschied zu Fahrradständern, die an werkseitig vorgesehenen Ständeraufnahmen des Fahrrads montiert werden können, können die Nachrüst-Fahrradständer auch an Fahrrädern montiert werden, die nicht werkseitig für die Montage eines Fahrradständers ausgerüstet sind und keine Ständeraufnahme aufweisen.

Die Befestigung eines gattungsgemäßen Nachrüst-Fahrradständers erfolgt durch Festlegung in dem Rahmendreieck des Fahrradrahmens, dass durch die annähernd horizontal verlaufende Kettenstrebe und durch die schräg nach vorn aufwärts verlaufene Sitzstrebe in der Nähe der Hinterradnabe gebildet wird. Der Fahrradständer weist einerseits einen Kopf auf und andererseits eine Stütze, wobei der Kopf an der Kettenstrebe des Fahrradrahmens montiert wird und die Stütze an dem Ständerkopf schwenkbar gelagert ist zwischen einer Fahrstellung und einer nach unten ragenden Stützstellung. Vom Kopf aus erstreckt sich eine Kopfschiene bis zur Sitzstrebe, wobei die Kopfschiene die Sitzstrebe umgreift und als Drehmomentstütze eine Drehbewegung des Kopfes um die Kettenstrebe verhindert.

Das Rahmendreieck weist bei den meisten Fahrrädern eine unveränderliche Geometrie auf. Wenn das Hinterrad des Fahrrads jedoch gefedert ist, kann je nach Ausgestaltung der Federung und des Fahrradrahmens eine gelenkige Beweglichkeit zwischen der Kettenstrebe und der Sitzstrebe vorgesehen sein.

Der Erfindung liegt die Aufgabe zugrunde, einen gattungsgemäßen Fahrradständer dahingehend zu verbessern, dass dieser als Nachrüst-Fahrradständer bei einer Vielzahl unterschiedlicher Fahrradrahmen einschließlich Fahrradrahmen mit Hinterradfederung verwendet werden kann.

Diese Aufgabe wird durch einen Fahrradständer mit den Merkmalen des Anspruchs 1 gelöst. Vorteilhafte Ausgestaltungen sind in den Unteransprüchen beschrieben.

Die Erfindung schlägt mit anderen Worten vor, eine Relativbewegung zwischen der Kopfschiene des Fahrradständers und der Sitzstütze des Fahrrads zu ermöglichen. Ohne diese Relativbewegung auszunutzen, kann der Fahrradständer an Fahrrädern mit einer starren Rahmengeometrie montiert werden. Der Fahrradständer kann jedoch auch an Fahrrädern montiert werden, deren Hinterradfederung Relativbewegungen zwischen der Kettenstrebe und der Sitzstrebe verursacht. Der Kopf des Fahrradständers behält seine Position an der Kettenstrebe bei, während sich die Sitzstrebe relativ zu der Kettenstrebe und damit auch relativ zu der Kopfschiene des Fahrradständers bewegt.

Um diese Relativbewegung zu ermöglichen weist der Fahrradständer vorschlagsgemäß eine Gleitführung auf, die an der Sitzstrebe befestigt werden kann. Die Kopfschiene schließt gleitbeweglich an die Gleitführung an. Dies kann auf unterschiedliche konstruktive Arten verwirklicht werden. Beispielsweise kann die Gleitführung einen Kulissenstein aufweisen, der in einer entsprechenden Führungsnut der Kopfschiene läuft. Oder an der Kopfschiene kann ein Kulissenstein vorgesehen sein, der in einer Führungsnut der Gleitführung läuft. Die Relativbewegung zwischen der Kettenstrebe und der Sitzstrebe erfolgt stets um einen Gelenkpunkt. Daher kann vorgesehen sein, dass die erwähnte Führungsnut gebogen verläuft. Um eine möglichst universelle Anpassung an die unterschiedlichsten Rahmentypen und Rahmengeometrien zu ermöglichen, und da der Abstand von dem erwähnten Gelenkpunkt möglicherweise nicht stets identisch gewählt werden kann, kann jedoch an Stelle einer gebogenen Führungsnut vorgesehen sein, dass die Gleitführung entlang der Sitzstrebe beweglich gelagert ist, oder dass sie die Kopfschiene in der Art führt, dass die Kopfschiene in der Gleitführung entlang der Sitzstrebe wandern kann. Aufgrund der unterschiedlichen und dem Fachmann grundsätzlich bekannten technischen Möglichkeiten, die Gleitführung und deren Zusammenspiel mit der Kopfschiene auszugestalten, muss an dieser Stelle darauf nicht näher eingegangen werden.

Vorschlagsgemäß ist schließlich weiterhin vorgesehen das dort, wo die Kopfschiene und die Gleitführung aneinander abgleiten und eine Gleitzone definieren, entweder die Gleitführung, oder die Kopfschiene, oder beide gleitfreudig ausgestaltet sind. Hierdurch wird erstens der Verschleiß der beiden Gleitpartner verringert und zweitens eine möglichst leichte Relativbeweglichkeit der beiden Gleitpartner zueinander sichergestellt, indem beispielsweise ein "Fressen" der verwendeten Materialien verhindert wird, welches die angestrebte Bewegung blockieren würde. Die gleitfreudige Ausgestaltung kann beispielsweise durch die Wahl des für das jeweilige Bauteil verwendeten Materials erreicht werden, oder durch eine Oberflächenbeschichtung des Bauteils im Bereich der Gleitzone.

In einer Ausgestaltung kann vorgesehen sein, dass sowohl die Kopfschiene als auch die Gleitführung jeweils einen Schlitz aufweisen, so dass sich die Kopfschiene und die Gleitführung jeweils gegenseitig durchdringen können. Hierdurch wird ohne Festlegung auf eine bestimmte Bewegungsbahn eine besonders freie Relativbeweglichkeit der Kopfschiene zur Gleitführung ermöglicht, so dass ein dementsprechend ausgestalteter Fahrradständer für eine sehr große Anzahl unterschiedlicher Fahrradtypen geeignet ist. Außerdem wird durch diese Ausgestaltung eine enge Passung vermieden, wie sie beispielsweise bei einem in einer Führungsnut laufenden Kulissenstein gegeben wäre. Verschmutzungen, die in die Schlitze eindringen, werden bei einer Relativbewegung zwischen Gleitführung und Kopfschiene automatisch entfernt, so dass die Relativbewegung nicht behindert wird und die offenen Schlitze einen selbstreinigenden Effekt bewirken, ohne einen hohen Wartungsaufwand zu erfordern.

Bei dieser Ausgestaltung weist die Kopfschiene einen Schlitz auf, der längs durch die Kopfschiene verläuft, so dass die Kopfschiene praktisch aus zwei nebeneinander und im Abstand zueinander verlaufenden Stegen besteht. Die Kopfschiene weist dabei erstens einen sogenannten inneren Steg auf, der zum Hinterrad des Fahrrads weist, wenn der Fahrradständer an dem Fahrrad montiert ist. Der zweite Steg wird als Außensteg bezeichnet, der auf der vom Hinterrad abgewandten Seite des inneren Stegs und im Abstand von dem inneren Steg verläuft. Auch die Gleitführung weist bei dieser Ausgestaltung einen Schlitz auf, so dass sie als Führungskäfig ausgestaltet ist, mit einem inneren Rahmensteg, der zu der Sitzstrebe weist, wenn der Fahrradständer an dem Fahrrad montiert ist. Weiterhin weist der Führungskäfig einen äußeren Schienensteg auf, der auf der von der Sitzstrebe abgewandten Seite des Rahmenstegs und im Abstand von diesem zu verläuft. Die gegenseitige Durchdringung erfolgt in der Art, dass der Schienensteg des Führungskäfigs sich durch den Schlitz der Kopfschiene erstreckt, und dass sich der innere Steg der Kopfschiene durch den Schlitz des Führungskäfigs erstreckt.

In einer Ausgestaltung kann die Gleitführung aus Kunststoff bestehen, so dass sie der Sitzstrebe anliegen kann, ohne diese zu verkratzen.

Die Kopfschiene hingegen kann aus Metall oder einem faserverstärkten Kunststoff bestehen, um die Stabilität zu gewährleisten, die für eine Drehmomentstütze wünschenswert ist. Dabei geht der vorliegende Vorschlag von der Überlegung aus, dass die Kopfschiene der Gleitführung von außen anliegt und die Gleitführung gegen die Sitzstrebe presst, wenn das Fahrrad abgestellt ist und durch den Fahrradständer abgestützt wird. Kräfte, welche die Kopfschiene von der Sitzstrebe und somit auch von der Gleitführung zu entfernen bestrebt sind, treten allenfalls im praktischen Betrieb auf, wenn die Stütze des Fahrradständers aus ihrer Stützstellung in die Fahrstellung hochgeschwenkt wird. Dies erfolgt typischerweise durch einen Kontakt mit dem Fuß, wobei ein Druck auf die Stütze in der Richtung nach hinten, aber auch von außen in der Richtung gegen das Hinterrad auf die Stütze ausgeübt wird. Die dabei auf die Gleitführung einwirkende Zugbelastung ist erwartungsgemäß geringer als die Druckbelastung, wenn die Kopfschiene als Drehmomentstütze wirksam und gegen die Gleitführung gedrückt wird, so dass für die Gleitführung ein anderer Kunststoff gewählt werden kann als für die ggf. aus Kunststoff bestehende Kopfschiene.

Wenn die gegenseitige Durchdringung der Kopfschiene und der Gleitführung mittels der erwähnten Schlitze vorgesehen ist, kann einer der beiden Schlitze an einem Ende offen sein, um eine problemlose Montage des Fahrradständers zu ermöglichen. Vorteilhaft jedoch kann vorgesehen sein, dass wenigstens einer und insbesondere beide Schlitze an beiden Enden geschlossen ist bzw. sind. Hierdurch ist auch bei maximalen Relativbewegungen ausgeschlossen, dass die Kopfschiene nicht mehr durch die Gleitführung geführt wird. Dies ist aus Sicherheitsgründen vorteilhaft, weil dadurch sichergestellt ist, dass der Kopf mitsamt der Stütze nicht um Kettenstrebe schwenken und ggf. in die Speichen des Hinterrades geraten kann. Eine Montage ist trotz der geschlossenen Schlitze problemlos möglich, indem beispielsweise eines der beiden beteiligten Bauteile in Art eines Karabinerhaken ausgestaltet ist, also geöffnet werden kann, oder indem eines der beiden beteiligten Bauteile aus zwei Hälften besteht, die wahlweise voneinander getrennt oder miteinander verbunden werden können, beispielsweise miteinander verschraubt werden können, und die in dem miteinander verbundenen Zustand den Schlitz zwischen sich bilden.

In einer Ausgestaltung kann die Gleitführung als längliche Spange in Art eines geschlossenen Rings mit einem dementsprechend länglichen Querschnitt ausgestaltet sein. Die Spange weist eine Trennstelle auf und ist elastisch verformbar, so dass sie geöffnet werden kann, ähnlich wie oben anhand des Beispiels eines Karabinerhakens beschrieben. Bei geöffneter Spange können die Gleitführung und die Kopfschiene einander durchdringend montiert werden, anschließend kann die Gleitführung geschlossen werden, so dass ein vorteilhaft ringsum geschlossener Schlitz geschaffen wird.

In einer Ausgestaltung kann die Kopfschiene zwei längliche Stege aufweisen, die miteinander verschraubt sind, ähnlich wie oben anhand des Beispiels zweier Hälften erläutert. Die Kopfschiene weist Abstandshalter auf, die als lose Bauteile zwischen den beiden Stegen angeordnet sein können, oder die an einem der beiden Stege oder an beiden Stege befestigt sein können, beispielsweise aus demselben Material angeformt sein können. Verbindung der beiden Stege miteinander bewirken die Abstandshalter, dass ein vorteilhaft ringsum geschlossener Schlitz geschaffen wird.

Zur Befestigung der Gleitführung an der Sitzstrebe kann in einer Ausgestaltung ein doppelseitig wirksames Klebeband verwendet werden. Auf diese Weise ist eine Relativbewegung der Gleitführung zur Sitzstrebe ausgeschlossen, so dass Verkratzungen der Sitzstrebe vermieden werden.

In einer anderen Ausgestaltung kann der Fahrradständer Haltebänder aufweisen, z.B. in Form von Kabelbindern, mittels derer die Gleitführung an der Sitzstrebe befestigt werden kann. Dies stellt einen zuverlässigen Halt der Gleitführung an der Sitzstrebe sicher, auch wenn angesichts der Vielzahl unterschiedlicher Querschnittsgeometrien von Sitzstreben keine großflächige Anlage der Gleitführung an einer bestimmten Sitzstrebe erreicht werden kann. Insbesondere können die beiden Befestigungstechnologien miteinander kombiniert werden, so dass die Haltebänder die zuverlässige Festlegung der Gleitführung an der Sitzstrebe gewährleisten und eine zusätzliche Verklebung kleinere, unerwünschte Relativbewegungen der Gleitführung an der Sitzstrebe verhindert.

Ein Ausführungsbeispiel der Erfindung wird anhand der rein schematischen Darstellungen nachfolgend näher erläutert. Dabei zeigt
- Fig. 1: eine perspektivische Ansicht von außen auf den Hinterbau eines Fahrrads, mit einem daran befestigten Nachrüst-Fahrradständer, der sich in seiner Stützstellung befindet,
- Fig. 2: den Fahrradständer von Fig. 1 in alleiniger, ebenfalls perspektivischer Darstellung von außen, wobei sich der Fahrradständer in seiner Fahrstellung befindet, und
- Fig. 3: den Fahrradständer der Fig. 1 und 2 in einer perspektivischen, auseinandergezogenen Darstellung von innen, wobei sich der Fahrradständer in seiner Stützstellung befindet.

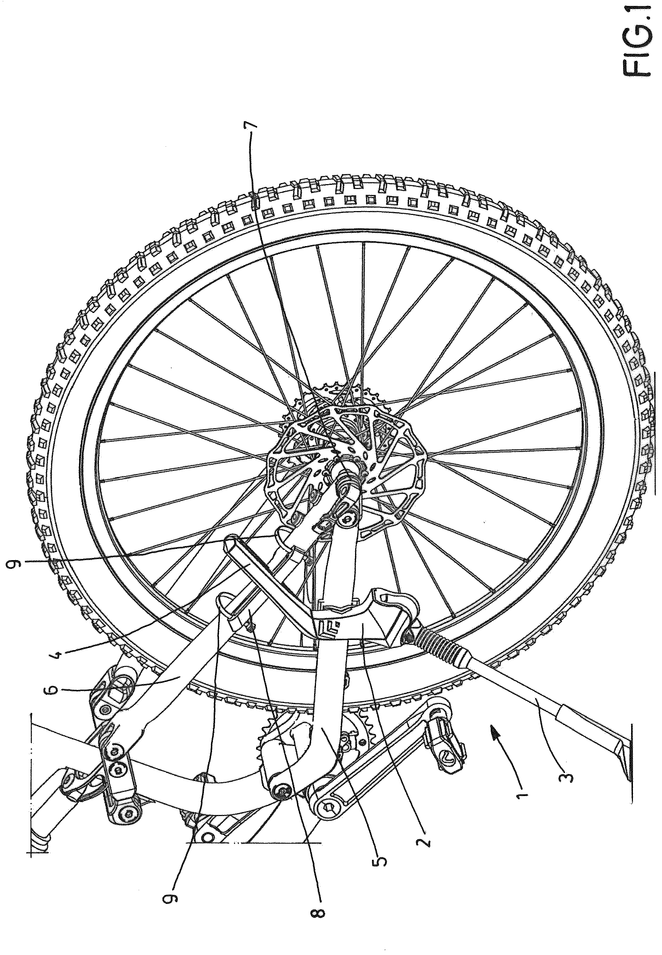

In Fig. 1 ist ein Fahrradständer 1 1 in einer perspektivischen Ansicht von außen dargestellt, der Der Fahrradständer 1 weist einen Kopf 2 eine Stütze 3 und eine Kopfschiene 4 auf und ist an dem Hinterbau eines nur teilweise dargestellten Fahrrads montiert, und zwar in dem Rahmendreieck, welches durch eine Kettenstrebe 5 und eine Sitzstrebe 6 in der Nähe einer Hinterradachse 7 gebildet wird. Der Fahrradrahmen weist eine Hinterradfederung auf, die in der Art ausgestaltet ist, dass die Kettenstrebe 5 und die Sitzstrebe 6 relativ zueinander beweglich sind, und dabei um einen Gelenkpunkt schwenkbar sind, der nahe der Hinterradachse 7 liegt.

Der Fahrradständer 1 weist außer den genannten Bauteilen eine Gleitführung 8 auf die Mithilfe von zwei Haltebändern 9 an der Sitzstrebe 6 festigt ist. Rein beispielhaft sind die Haltebänder 9 als Kabelbinder ausgestaltet und in einer noch nicht endgültig montierten Anordnung dargestellt, in welcher sie noch nicht festgezogen sind und der Sitzstrebe 6 noch nicht eng anliegen.

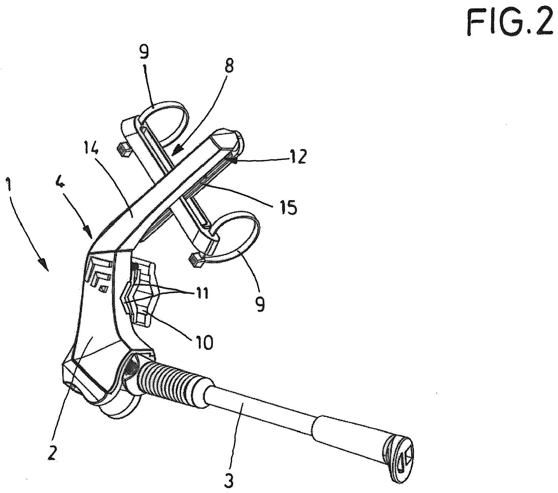

Fig. 2 zeigt den Fahrradständer 1 wie Fig. 1 in einer perspektivischen Ansicht von außen, jedoch ohne die Komponenten des in Fig. 1 dargestellten Fahrrads. Im Unterschied zu Fig. 1 befindet sich der Fahrradständer 1 nicht in der Gebrauchs- oder Stützstellung, sondern vielmehr in der Ruhe- oder Fahrstellung, in welche die Stütze im Wesentlichen liegend und nach hinten weisend ausgerichtet ist.

Dabei ist erkennbar, dass der Kopf 2 des Fahrradständers 1 mithilfe einer Klemmschelle 10 an der Kettenstrebe 5 montiert werden kann. In Anpassung an unterschiedliche Durchmesser und Querschnittsgeometrien der verschiedenen Kettenstreben 5 sind Einlagen 11 vorgesehen, die wahlweise und in der erforderlichen Anzahl montiert werden können, um einen festen Halt des Kopfes 2 an der Kettenstrebe 5 zu ermöglichen. Bei dem dargestellten Ausführungsbeispiel sind rein beispielhaft zwei derartige Einlagen 11 dargestellt.

Weiterhin ist aus Fig. 2 ersichtlich, dass die Kopfschiene 4 einen Schlitz 12 aufweist, der zwischen einem Außensteg 14 und einem Innensteg 15 der Kopfschiene 4 gebildet wird.

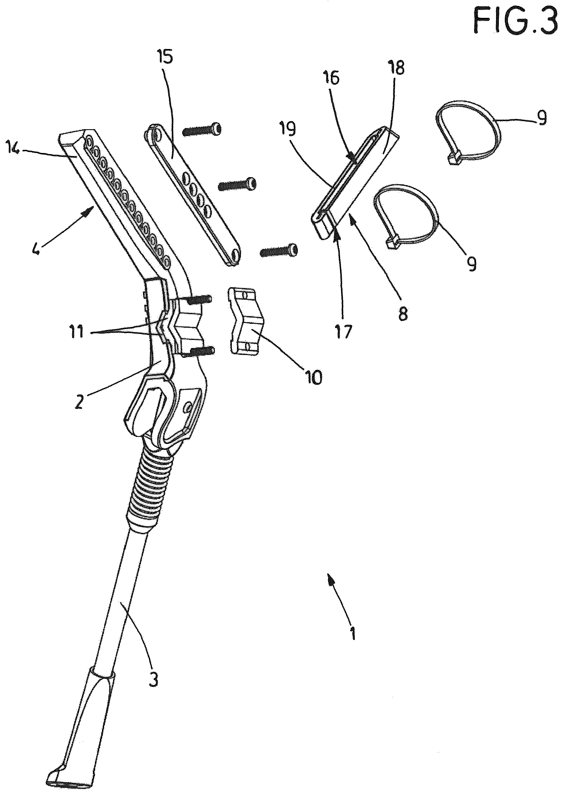

Fig. 3 zeigt, dass auch die Gleitführung 8 einen Schlitz 16 aufweist. Sie ist in Art einer Spange ausgestaltet, die einen länglichen, den Schlitz 16 umgebenden Führungskäfig bildet und eine Trennstelle 17 aufweist, an welcher die Gleitführung 8 wahlweise geöffnet oder verschlossen werden kann. Im Unterschied zu Fig. 1 und 2 zeigt Fig. 3 den Fahrradständer 1 von innen, also in einer Blickrichtung vom Hinterrad her, so dass ein Rahmensteg 18 der Gleitführung 8 dem Betrachter zugewandt ist, während jenseits des Schlitzes 16 ein Schienensteg 19 der Gleitführung 8 verläuft. Die Trennstelle 17 befindet sich nahe dem einen Ende der länglichen Gleitführung 8, so dass ein kürzerer und ein längerer Abschnitt des Rahmenstegs 18 an der Trennstelle 17 zusammentreffen. Der längere Abschnitt des Rahmenstegs 18 hintergreift dabei den kürzeren Abschnitt, in dem er eine Haltezunge bildet, die in den Schlitz 16 eintaucht und innerhalb des Schlitzes 16 hinter den kürzeren Abschnitt des Rahmenstegs 18 verläuft. Auf diese Weise ist die Gleitführung 8 gegen eine versehentliche Öffnung gesichert. Unter elastischer Verformung des längeren Abschnitts des Rahmenstegs 18

Bei dem fertig montierten Fahrradständer 1 verläuft der Schienensteg 19 der Gleitführung 8 durch den Schlitz 12 der Kopfschiene 4, und gleichzeitig verläuft der Innensteg 15 der Kopfschiene 4 durch den Schlitz 16 der Gleitführung 8, so dass sich die Kopfschiene 4 und die Gleitführung 8 gegenseitig durchdringen. Die Kopfschiene 4 verhindert daher Drehbewegungen in beiden Drehrichtungen, die der Kopf 2 um die Kettenstrebe 5 ansonsten ausführen könnte.

Bei dem dargestellten Ausführungsbeispiel ist vorgesehen, dass der Kopf 2 und die Kopfschiene 4 aus einem metallischen Werkstoff bestehen, während die Gleitführung 8 aus einem Kunststoff besteht. Auf diese Weise sind hervorragende Gleiteigenschaften gewährleistet, wenn bei einer Relativbewegung die Kopfschiene 4 und die Gleitführung 8 aneinander abgleiten. Abweichend von diesen Ausführungsbeispiel können auch andere Materialien Verwendung finden, z. B. können statt metallischer Werkstoffe Faserverbundstoffe verwendet werden, z. B. faserverstärkte Kunststoffe, und die gewünschten Gleiteigenschaften können durch eine geeignete Oberflächengestaltung erreicht werden, z.B. durch eine Oberflächenbeschichtung.

### Bezugszeichen:

- 1: Fahrradständer
- 2: Kopf
- 3: Stütze
- 4: Kopfschiene
- 5: Kettenstrebe
- 6: Sitzstrebe
- 7: Hinterradachse
- 8: Gleitführung
- 9: Halteband
- 10: Klemmschelle
- 11: Einlage
- 12: Schlitz (in der Kopfschiene)
- 14: Außensteg
- 15: Innensteg
- 16: Schlitz (in der Gleitführung)
- 17: Trennstelle
- 18: Rahmensteg
- 19: Schienensteg

## Patentansprüche

1. Fahrradständer (1),
mit einem Kopf (2), der dazu bestimmt ist, an einer Kettenstrebe (5) eines Fahrradrahmens festgelegt zu werden, und mit einer Stütze (3), die gelenkig an dem Kopf (2) gelagert ist und zwischen einer im Wesentlichen liegenden Fahrstellung und einer im Wesentlichen aufrechten Stützstellung beweglich ist,
und mit einer Kopfschiene (4), die an den Kopf (2) anschließt und dazu bestimmt ist, an einer Sitzstrebe (6) eines Fahrradrahmens in der Art festgelegt zu werden, dass sie als Drehmomentstütze den Kopf (2) gegen eine Drehbewegung um die Kettenstrebe (5) sichert,
**dadurch gekennzeichnet,**
**dass** der Fahrradständer (1) eine Gleitführung (8) aufweist, die dazu bestimmt ist, an der Sitzstrebe (6) festgelegt zu werden,
und **dass** die Kopfschiene (4) in der Art gleitbeweglich an die Gleitführung (8) anschließt,
**dass** unter Beibehaltung der Position der Kopfschiene (4) in Bezug auf die Kettenstrebe (5) eine Beweglichkeit der Kopfschiene (4) in Bezug auf die Sitzstrebe (6) ermöglicht ist,
wobei die Gleitführung (8) und / oder die Kopfschiene (4) wenigstens im Bereich einer Gleitzone, wo sie aneinander abgleiten, gleitfreudig ausgestaltet sind.

2. Fahrradständer nach Anspruch 1,
**dadurch gekennzeichnet,**
**dass** die Kopfschiene (4) einen Schlitz (12) aufweist, der längs durch die Kopfschiene (4) verläuft, derart, dass die Kopfschiene (4) einen Innensteg (15) aufweist, der dazu bestimmt ist, zum Hinterrad des Fahrrads zu weisen, sowie einen Außensteg (14), der dazu bestimmt ist, auf der vom Hinterrad abgewandten Seite des Innenstegs (15) und im Abstand von diesem zu verlaufen, und dass die Gleitführung (8) als Führungskäfig ausgestaltet ist, der ebenfalls einen Schlitz (16) in der Art aufweist, dass die Gleitführung (8) einen inneren Rahmensteg (18) aufweist, der dazu bestimmt ist, zu der Sitzstrebe (6) zu weisen, sowie einen äußeren Schienensteg (19), der dazu bestimmt ist, auf der von der Sitzstrebe (6) abgewandten Seite des Rahmenstegs (18) und im Abstand von diesem zu verlaufen,
wobei sich der Schienensteg (19) der Gleitführung (8) durch den Schlitz (12) der Kopfschiene (4) erstreckt und sich der Innensteg (15) der Kopfschiene (4) durch den Schlitz (16) der Gleitführung (8) erstreckt.

3. Fahrradständer nach Anspruch 1 oder 2,
**dadurch gekennzeichnet,**
**dass** die Gleitführung (8) aus Kunststoff besteht.

4. Fahrradständer nach einem der vorhergehenden Ansprüche,
**dadurch gekennzeichnet,**
**dass** die Kopfschiene (4) aus Metall oder einem faserverstärkten Kunststoff besteht.

5. Fahrradständer nach einem der Ansprüche 2 bis 4,
**dadurch gekennzeichnet,**
**dass** der Schlitz (12) der Kopfschiene (4) und / oder der Schlitz (16) der Gleitführung (8) an beiden Enden geschlossen ist.

6. Fahrradständer nach einem der vorhergehenden Ansprüche,
**dadurch gekennzeichnet,**
**dass** die Gleitführung (8) als längliche Spange in Art eines geschlossenen Rings mit länglichem Querschnitt ausgestaltet ist,
wobei die Spange eine Trennstelle (17) aufweist und elastisch in der Art verformbar ist, dass der Ring geöffnet werden kann.

7. Fahrradständer nach einem der vorhergehenden Ansprüche,
**dadurch gekennzeichnet,**
**dass** die Kopfschiene (4) zwei längliche Stege aufweist, die miteinander verschraubt sind,
wobei die Kopfschiene (4) Abstandshalter aufweist, welche die Stege in einem Abstand voneinander halten, derart, dass die Stege zwischen sich einen Schlitz (12) schaffen.

8. Fahrradständer nach einem der vorhergehenden Ansprüche,
**dadurch gekennzeichnet,**
**dass** der Fahrradständer (1) Haltebänder (9) aufweist, die dazu bestimmt sind, die Gleitführung (8) an der Sitzstrebe (6) zu befestigen.

## Claims

1. Bicycle stand (1),
having a head (2) that is designed for fastening to a chain stay (5) of a bicycle frame and having a prop (3) that is mounted pivotably on the head (2) and can be moved between an essentially horizontal travel position and an essentially upright stand position and having a head rail (4) that is connected to the head (2) and is designed for fastening to a seat stay (6) on a bicycle frame in such a way that it acts as a torque support arm to prevent the head (2) from rotating about the chain stay (5), **characterised in**
**that** the bicycle stand (1) incorporates a slide guide (8) that is designed for fastening to the seat stay (6)
and **that** the head rail (4) connects slidingly to the slide guide (8) in such a way
**that**, while retaining the position of the head rail (4) relative to the chain stay (5), the head rail (4) is enabled to move relative to the seat stay (6) where the slide guide (8) and/or the head rail (4) are at least in the area of a sliding section where they slide against each other designed to slide easily.

2. Bicycle stand in accordance with claim 1, **characterised in**
**that** the head rail (4) incorporates a slot (12) that runs lengthways through the head rail (4) in such a way that the head rail (4) incorporates an inner bar (15 that is designed to be oriented towards the rear wheel of the bicycle and an outer bar (14) that is designed to extend along that side of the inner bar (15) that is oriented away from the rear wheel and at a distance from the inner bar (15) and that the slide guide (8) is designed as a guide cage that likewise incorporates a slot (16) in such a way that the slide guide (8) incorporates an inner frame bar (18) that is designed to be oriented towards the seat stay (6) and an outer rail bar (19) that is designed to extend along that side of the frame bar (18) that is oriented away from the seat stay (6) and at a distance from the frame bar (18),
where the rail bar (19) of the slide guide (8) extends through the slot (12) in the head rail (4) and the inner bar (15) of the head rail (4) extends through the slot (16) in the slide guide (8).

3. Bicycle stand in accordance with claim 1 or 2, **characterised in that** the slide guide (8) is made from plastic.

4. Bicycle stand in accordance with any one of the foregoing claims,
**characterised in**
**that** the head rail (4) is made from metal or a fibre-reinforced plastic.

5. Bicycle stand in accordance with any one of claims 2 to 4,
**characterised in**
**that** the slot (12) in the head rail (4) and/or the slot (16) in the slide guide (8) is/are closed at both ends.

6. Bicycle stand in accordance with any one of the foregoing claims,
**characterised in**
**that** the slide guide (8) is designed as an elongated clasp in the manner of a closed ring with an elongated cross-section,
where the clasp incorporates a parting point (17) and can be elastically deformed in such a way that the ring can be opened.

7. Bicycle stand in accordance with any one of the foregoing claims,
**characterised in**
**that** the head rail (4) incorporates two elongated bars that are bolted together,
where the head rail (4) incorporates distance pieces that hold the bars a distance apart in such a way that a slot (12) is formed between the bars.

8. Bicycle stand in accordance with any one of the foregoing claims,
**characterised in**
**that** the bicycle stand (1) incorporates retaining bands (9) that are designed for fastening the slide guide (8) to the seat stay (6).

## Revendications

1. Béquille (1) de bicyclette,
comprenant une tête (2) destinée à être fixée contre la base (5), avec chaîne, d'un cadre de bicyclette,
et comprenant une jambe d'appui (3) en appui articulé au niveau de la tête (2), jambe d'appui qui est déplaçable entre une position de conduite essentiellement horizontale et une position d'appui essentiellement verticale,
et avec une patte têtière (4) raccordée à la tête (2) et servant à être immobilisée contre un hauban (6) d'un cadre de bicyclette de sorte à servir de bras de réaction empêchant la tête (2) d'exécuter un mouvement tournant autour de la base (5),
**caractérisée en ce**
**que** la béquille (1) présente un moyen de guidage (8) par glissement servant à être fixé contre le hauban (6),
et en ce que la patte têtière (4) vient se raccorder au moyen de guidage (8) lui permettant de glisser,
de sorte qu'en conservant la position de la patte têtière (4) par rapport à la base (5), une mobilité de la patte têtière (4) par rapport au hauban (6) est rendue possible,
sachant que le moyen de guidage (8) par glissement et/ou la patte têtière (4) sont configurés pour glisser facilement, en se longeant, au moins dans le domaine d'une zone de glissement.

2. Béquille selon la revendication 1,
**caractérisée en ce**
**que** la patte têtière (4) présente une fente (12) au tracé longitudinal traversant la patte têtière (4),
de sorte que le patte têtière (4) présente une nervure intérieure (15) destinée à pointer en direction de la roue arrière de la bicyclette, ainsi qu'une nervure extérieure (14) destinée à avoir un tracé sur le côté de la nervure intérieure (15) ne regardant pas la roue arrière et à distance de cette nervure intérieure,
et en ce que le guidage par glissement (8) est configuré en cage de guidage qui présente elle aussi une fente (16) faisant que le guidage par glissement (8) présente une nervure cadre intérieure (18) destinée à regarder vers le hauban (6), ainsi qu'une nervure extérieure (19) de patte servant à avoir un tracé sur le côté de la nervure cadre (18) ne regardant pas le hauban (6) et à ce que ce tracé soit distant de cette nervure,
sachant que la nervure (19) de patte du guidage par glissement (8) s'étend à travers la fente (12) de la patte têtière (4) et que la nervure intérieure (15) de la patte têtière (4) s'étend à travers la fente (16) du guidage par glissement (8).

3. Béquille selon la revendication 1 ou 2,
**caractérisée en ce**
**que** le guidage par glissement (8) est en matière plastique.

4. Béquille selon l'une des revendications précédentes,
**caractérisée en ce**
**que** la patte têtière (4) est en métal ou en matière plastique renforcée de fibres.

5. Béquille selon l'une des revendications 2 à 4,
**caractérisée en ce**
**que** la fente (12) de la patte têtière (4) et/ou la fente (16) du guidage par glissement (8) est/sont fermée(s) aux deux extrémités.

6. Béquille selon l'une des revendications précédentes,
**caractérisée en ce**
**que** le guidage par glissement (8) est configuré en barrette oblongue du genre anneau fermé présentant une section oblongue,
sachant que cette barrette présente une zone de séparation (17) et qu'elle est déformable élastiquement de sorte à pouvoir ouvrir l'anneau.

7. Béquille selon l'une des revendications précédentes,
**caractérisée en ce**
**que** la patte têtière (4) présente deux nervures oblongues vissées l'une avec l'autre,
sachant que la patte têtière (4) présente des écarteurs maintenant les nervures distantes les unes des autres de sorte que les nervures forment une fente (12) entre elles.

8. Béquille selon l'une des revendications précédentes,
**caractérisée en ce**
**que** la béquille (1) de bicyclette présente des bracelets de retenue (9) servant à fixer le guidage par glissement (8) contre le hauban (6).
